# DEMANDE DE BREVET EUROPEEN

(11) **EP 2 133 236 A1**
(43) Date de publication de la demande: **16.12.2009**
(21) Numéro de dépôt: 09305454.2
(22) Date de dépôt: 19.05.2009
(51) Int. Cl.: B60Q 1/26

(54) **Agencement pour la fixation d'un feu de signalisation**

(30) Priorité: 11.06.2008 FR 0853876
(71) Demandeur: Renault s.a.s., 92100 Boulogne-Billancourt (FR)
(72) Inventeur: Matha, Paul Henri, 78280 GUYANCOURT (FR)

(57) **Abrégé**

L'invention propose un agencement (10) pour la fixation d'un feu (12) d'un véhicule automobile, un boîtier (22) dudit feu étant reçu dans un logement (24) contigu à un ouvrant (20) du véhicule et au moins un bord (16) du feu étant adjacent avec jeu (J) à au moins un bord (18) de l'ouvrant, le feu (12) étant monté mobile par rapport au logement suivant une direction sensiblement perpendiculaire aux bords (16,18), **caractérisé en ce qu**'une platine (26), réglable suivant la direction perpendiculaire aux bords (16,18) du feu (12) et de l'ouvrant (20), est fixée sur un fond (28) du logement (24), et en ce que le boîtier (22) du feu est monté d'une part de manière isostatique sur ladite platine (26) et d'autre part de manière mobile suivant la direction perpendiculaire aux bords (16,18) du feu (12) et de l'ouvrant (20) par rapport au fond (28) du logement (24).

## Description

L'invention concerne un agencement pour la fixation d'un feu de signalisation sur un élément de structure de caisse de véhicule automobile.

L'invention concerne plus particulièrement un agencement pour la fixation d'un feu de signalisation sur un élément de structure de caisse de véhicule automobile, un boîtier dudit feu étant reçu dans un logement de l'élément de structure de caisse contigu à un ouvrant du véhicule et au moins un bord du feu étant adjacent avec jeu à au moins un bord de l'ouvrant, le feu étant monté mobile par rapport au logement suivant une direction sensiblement perpendiculaire aux bords.

On connaît de nombreux exemples d'agencements de ce type.

Selon une conception connue, il est connu en particulier de procéder à la fixation d'un boîtier d'un feu de signalisation au moyen de tiges filetées d'un diamètre déterminé qui s'étendent à partir d'une face arrière du boîtier du feu, qui traversent des perçages d'un diamètre supérieur pratiqués dans une paroi de fond du logement de l'élément de structure de caisse, et qui peuvent être serrées au dos de la paroi de fond du logement par des écrous. Le feu est donc mobile parallèlement à la paroi de fond du logement dans toutes les directions et son immobilisation n'est assurée que par des patins de matériau élastomère, généralement interposés entre la face arrière du boîtier et la paroi de fond du logement.

La mise en position du feu avec un jeu déterminé entre un bord du feu et le bord d'un ouvrant voisin n'est donc possible qu'en mettant en position grossièrement le feu et en serrant les écrous avec un couple élevé. Cette mise en position ne garantit pas non plus un maintien en position du feu si les écrous viennent à se desserrer.

Enfin, cette configuration nécessite un ajustement visuel dans au moins deux directions de la position du feu, ajustement qu'il n'est pas possible de répéter sur une grande échelle, et notamment dans le cadre d'un assemblage sur une ligne de fabrication.

L'invention remédie à cet inconvénient en proposant un agencement du type décrit précédemment permettant un réglage précis du jeu existant entre le bord du feu et le bord de l'ouvrant.

Dans ce but, l'invention propose un agencement du type décrit précédemment, **caractérisé en ce qu**'une platine, réglable suivant la direction perpendiculaire aux bords du feu et de l'ouvrant, est fixée sur un fond du logement, et en ce que le boîtier du feu est monté d'une part de manière isostatique sur ladite platine et d'autre de manière mobile suivant la direction perpendiculaire aux bords du feu et de l'ouvrant par rapport au fond du logement, pour permettre un ajustement du jeu entre le bord du feu et le bord de l'ouvrant en réglant la position de la platine.

Selon d'autres caractéristiques de l'invention,
- la platine comporte une première paroi plane de fixation, percée de deux trous oblongs orientés perpendiculairement aux bords du feu et de l'ouvrant, qui sont destinés à être traversés par des vis reçues dans des écrous prisonniers solidaires du fond du logement, pour permettre son réglage suivant la direction perpendiculaire aux bords du feu et de l'ouvrant,
- la platine comporte une seconde paroi de support de feu, décalée par rapport à la première paroi suivant une direction perpendiculaire au fond du logement, qui comporte une lumière destinée à recevoir un pion complémentaire porté par une face arrière du boîtier du feu pour assurer une mise en position isostatique du boîtier de feu par rapport à la platine,
- la lumière présente la forme d'une découpe rectangulaire et le pion présente la forme d'une tige d'orientation perpendiculaire à la face arrière du boîtier à partir de laquelle s'étendent radialement quatre branches destinées à être reçues contre les bords de la lumière,
- le fond du logement comporte au moins deux trous oblongs orientés perpendiculairement aux bords du feu et de l'ouvrant, qui sont destinés à recevoir deux éléments de coulissement portés par des extrémités de tiges s'étendant perpendiculairement à partir de la face arrière du boîtier,
- les éléments de coulissement comportent une tête sphérique ou ronde sur laquelle est reçu un élément annulaire ovale qui est susceptible de pivoter autour de ladite tête autour d'un axe perpendiculaire aux bords du feu et de l'ouvrant et dont l'encombrement transversal correspond sensiblement à l'encombrement à la distance séparant les bords parallèles de chaque trou oblong,
- un gabarit amovible est susceptible d'être interposé entre le bord de l'ouvrant et la platine pour déterminer une position de montage de la platine.

D'autres caractéristiques et avantages de l'invention apparaîtront à la lecture de la description détaillée qui suit pour la compréhension de laquelle on se reportera aux dessins annexés dans lesquels :
- la figure 1 est une vue de face d'une partie arrière d'un véhicule automobile comportant un agencement selon l'invention;
- la figure 2 est une vue de face d'une partie arrière d'un véhicule comportant un agencement selon l'invention, dont le feu est démonté;
- la figure 3 est une vue de la face arrière d'un boîtier de feu pour un agencement selon l'invention.

Dans la description qui va suivre, des chiffres de référence identiques désignent des pièces identiques ou ayant des fonctions similaires.

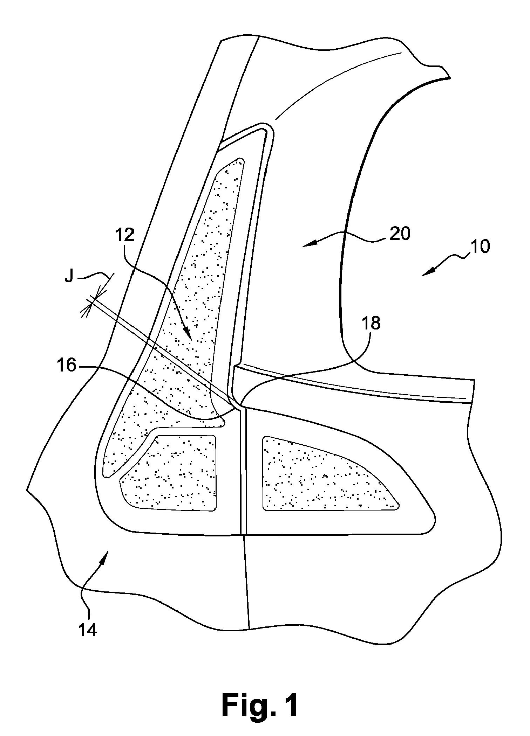

On a représenté sur les figures 1 à 3 un agencement 10 pour la fixation d'un feu 12 de signalisation sur un élément 14 de structure de caisse de véhicule automobile.

De manière connue, un bord 16 du feu 12 peut être agencé de manière adjacente à un bord 18 d'un ouvrant 20.

A cet effet, comme l'illustrent les figures, un boîtier 22 dudit feu est reçu dans un logement 24 contigu à l'ouvrant 20 du véhicule de manière que le bord 16 du feu 12 soit adjacent avec un jeu "J" au bord 18 de l'ouvrant 20.

De manière connue, le feu 12 peut être mobile par rapport au logement 24 suivant une direction sensiblement perpendiculaire aux bords 16, 18, en faisant varier le jeu "J".

Conventionnellement, le boîtier d'un feu de signalisation est fixé au moyen de tiges filetées d'un diamètre déterminé qui s'étendent à partir d'une face arrière du boîtier du feu, qui traversent des perçages d'un diamètre supérieur pratiqués dans une paroi de fond du logement de l'élément de structure de caisse, et qui peuvent être serrées au dos de la paroi de fond du logement par des écrous. Le feu est donc mobile parallèlement à la paroi de fond du logement dans toutes les directions et son immobilisation n'est assurée que par des patins de matériau élastomère, généralement interposés entre la face arrière du boîtier et la paroi de fond du logement.

Cette conception ne permet qu'un réglage grossier de la position du feu 12, et ne permet en aucun cas de régler précisément le jeu "J".

Pour remédier à cet inconvénient, l'invention propose des moyens d'ajustement précis du jeu "J".

A cet effet, une platine 26, réglable suivant la direction perpendiculaire aux bords 16, 18 du feu 12 et de l'ouvrant 20, est fixée sur un fond 28 du logement 24, et le boîtier 22 du feu 12 est monté d'une part de manière isostatique sur ladite platine 26 et d'autre de manière mobile suivant la direction perpendiculaire aux bords 16, 18 du feu 12 et de l'ouvrant 20 par rapport au fond 28 du logement 24, pour permettre un ajustement du jeu "J" entre le bord 16 du feu 12 et le bord 18 de l'ouvrant 24 en réglant la position de la platine 26.

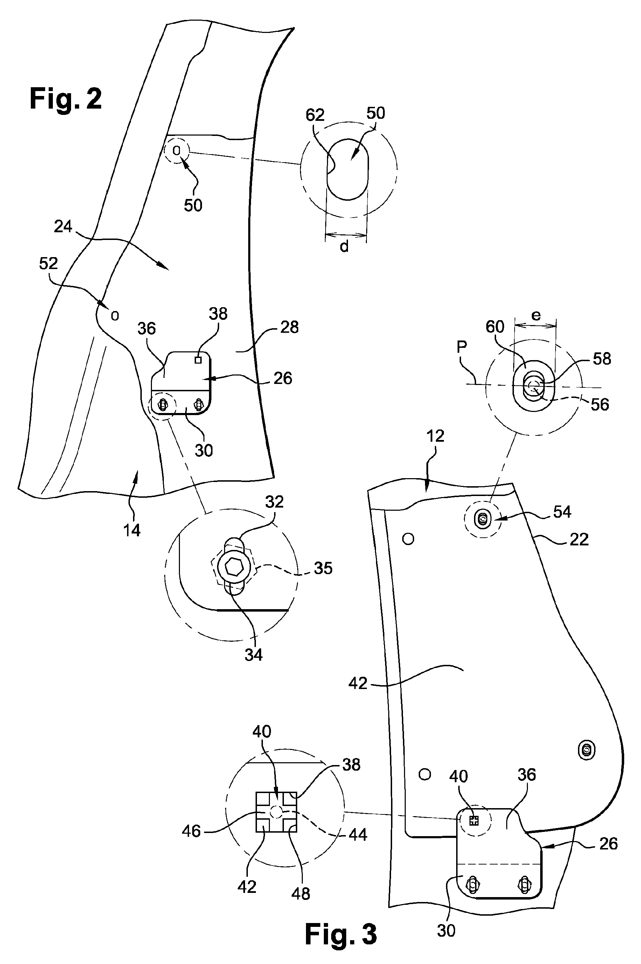

A cet effet, comme l'illustre la figure 2, la platine 26 comporte plus particulièrement une première paroi 30 plane de fixation, percée de deux trous oblongs 32 orientés perpendiculairement aux bords du feu et de l'ouvrant, qui sont destinés à être traversés par des vis 34 reçues dans des écrous 35 prisonniers solidaires du fond 28 du logement 24, pour permettre son réglage suivant la direction perpendiculaire aux bords 16, 18 du feu 12 et de l'ouvrant 20

La platine 26 comporte par ailleurs une seconde paroi 36 de support de feu, décalée par rapport à la première paroi 30 suivant une direction perpendiculaire au fond 28 du logement 24, qui comporte une lumière 38 destinée à recevoir un pion 40 complémentaire porté par une face arrière 42 du boîtier 22 du feu 12 pour assurer une mise en position isostatique du boîtier 22 de feu 12 par rapport à la platine 26.

De préférence, la lumière 38 présente la forme d'une découpe rectangulaire et le pion 40 présente la forme d'une tige 44 d'orientation perpendiculaire à la face arrière du boîtier à partir de laquelle s'étendent radialement quatre branches 46 destinées à être reçues contre les bords 48 de la lumière 38.

Cette configuration n'est toutefois pas limitative de l'invention et tout moyen permettant de réaliser une mise en position isostatique du boîtier 22 du feu 12 par rapport à la platine 26 pourrait être utilisé.

Par ailleurs, le fond 28 du logement 24 comporte au moins deux trous oblongs 50, 52 orientés perpendiculairement aux bords 16, 18 du feu 12 et de l'ouvrant 20, qui sont destinés à recevoir deux éléments 54 de coulissement portés par des extrémités de tiges 56 s'étendant perpendiculairement à partir de la face arrière 42 du boîtier 22.

Ces éléments 54 de coulissement comportent avantageusement chacun une tête sphérique 58 ou ronde sur laquelle est reçu un élément annulaire ovale 60 qui est susceptible de pivoter autour de ladite tête 58 autour d'un axe "P" perpendiculaire aux bords 16, 18 du feu 12 et de l'ouvrant 20 et dont l'encombrement transversal "e" correspond sensiblement à l'encombrement à la distance "d" séparant les bords parallèles 62 de chaque trou oblong 50, 52.

La possibilité de rotation de chaque tête sphérique 58 permet d'absorber les différences de parallélisme entre le fond 28 du logement 24 et la face arrière 42 du feu 12.

Ainsi, pour procéder au montage du feu 12, il suffit d'interposer entre la platine 26 et le bord 18 de l'ouvrant un gabarit amovible (non représenté) qui permet de déterminer précisément la position de la platine 26. Puis il suffit de serrer les vis 4 pour immobiliser la platine 26 et d'emboîter le feu 12 sur la platine 26 et sur le fond 28 du logement 24 pour obtenir le jeu "J" voulu, qui est prédéterminé par les dimensions du gabarit.

L'invention permet donc de réduire avantageusement les jeux de montage entre un feu 12 et un ouvrant 20 voisin.

## Revendications

1. Agencement (10) pour la fixation d'un feu (12) de signalisation sur un élément (14) de structure de caisse de véhicule automobile, un boîtier (22) dudit feu (12) étant reçu dans un logement (24) contigu à un ouvrant (20) du véhicule et au moins un bord (16) du feu (12) étant adjacent avec jeu (J) à au moins un bord (18) de l'ouvrant (20), le feu (12) étant monté mobile par rapport au logement suivant une direction sensiblement perpendiculaire aux bords (16, 18),
**caractérisé en ce qu'**une platine (26), réglable suivant la direction perpendiculaire aux bords (16, 18) du feu (12) et de l'ouvrant (20), est fixée sur un fond (28) du logement (24), et **en ce que** le boîtier (22 )du feu (12) est monté d'une part de manière isostatique sur ladite platine (26) et d'autre de manière mobile suivant la direction perpendiculaire aux bords (16, 18) du feu (12) et de l'ouvrant (20) par rapport au fond (28) du logement (24), pour permettre un ajustement du jeu (J) entre le bord (16) du feu (12) et le bord (18) de l'ouvrant (20) en réglant la position de la platine (26) .

2. Agencement (10) selon la revendication précédente, **caractérisé en ce que** la platine (26) comporte une première paroi (30) plane de fixation, percée de deux trous oblongs (32) orientés perpendiculairement aux bords (16, 18) du feu (12) et de l'ouvrant (20), qui sont destinés à être traversés par des vis (34) reçues dans des écrous prisonniers (35) solidaires du fond (28) du logement (24), pour permettre son réglage suivant la direction perpendiculaire aux bords (16, 18) du feu (12) et de l'ouvrant (20).

3. Agencement (10) selon la revendication précédente, **caractérisé en ce que** la platine (26) comporte une seconde paroi (36) de support de feu, décalée par rapport à la première paroi (30) suivant une direction perpendiculaire au fond (28) du logement (24), qui comporte une lumière (38) destinée à recevoir un pion (40) complémentaire porté par une face arrière (42) du boîtier (22) du feu (12) pour assurer une mise en position isostatique du boîtier (22) de feu par rapport à la platine (26).

4. Agencement (10) selon la revendication précédente, **caractérisé en ce que** la lumière (38) présente la forme d'une découpe rectangulaire et **en ce que** le pion (40) présente la forme d'une tige (44) d'orientation perpendiculaire à la face arrière (42) du boîtier (22) à partir de laquelle s'étendent radialement quatre branches (46) destinées à être reçues contre les bords (48) de la lumière (38).

5. Agencement (10) selon l'une des revendications 1 à 4, **caractérisé en ce que** le fond (28) du logement (24) comporte au moins deux trous oblongs (50, 52) orientés perpendiculairement aux bords (16, 18) du feu (12) et de l'ouvrant (20), qui sont destinés à recevoir deux éléments (54) de coulissement portés par des extrémités de tiges (56) s'étendant perpendiculairement à partir de la face arrière (42) du boîtier (22).

6. Agencement (10) selon la revendication précédente, **caractérisé en ce que** les éléments (54) de coulissement comportent une tête (58) sphérique ou ronde sur laquelle est reçu un élément annulaire ovale (60) qui est susceptible de pivoter autour de ladite tête (58) autour d'un axe "P" perpendiculaire aux bords (16, 18) du feu (12) et de l'ouvrant (20) et dont l'encombrement transversal (e) correspond sensiblement à l'encombrement à la distance (d) séparant les bords parallèles (62)de chaque trou oblong (50, 52)

7. Agencement (10) selon l'une quelconque des revendications précédentes, **caractérisé en ce qu'**un gabarit amovible est susceptible d'être interposé entre le bord (18) de l'ouvrant (20) et la platine (26) pour déterminer une position de montage de la platine (26).
